Europäisches Patentamt

European Patent Office

Office européen des brevets

(11) Veröffentlichungsnummer: **0 128 246**
**A1**

(12) **EUROPÄISCHE PATENTANMELDUNG**

(21) Anmeldenummer: 83200867.6

(22) Anmeldetag: 13.06.83

(51) Int. Cl.³: **A 01 F 25/20,** B 26 D 7/01

(43) Veröffentlichungstag der Anmeldung: 19.12.84
**Patentblatt 84/51**

(71) Anmelder: **Trioliet-Mullos Silo Nederland B.V.,
Smitsbreeweg 2, NL-7581 HE Losser (NL)**

(72) Erfinder: **Liet, Cornelis Hendricus, Denekamperdijk 38,
NL-7581 PJ Losser (NL)**
Erfinder: **Liet, Fredericus, Wilgenkamp 74, NL-7581 HD
Losser (NL)**

(74) Vertreter: **de Vries, Johannes Hendrik Fokke et al,
Octrooibureau Los en Stigter B.V. P.O. Box 20052,
NL-1000 HB Amsterdam (NL)**

(84) Benannte Vertragsstaaten: **AT BE CH DE FR GB IT LI LU
NL SE**

(54) Schneidvorrichtung zum Schneiden von Viehfutter oder dergleichem Gewächs, sowie Silagegutschneider oder sonstiges
landwirtschaftliches Gerät, ausgeführt mit einer dergleichen Schneidvorrichtung.

(57) Die Erfindung betrifft eine Schneidvorrichtung (2) zum
Schneiden von Viehfutter oder dergleichem Gewächs, die
mit einem aufwärts und abwärts beweglichen, plattenförmigen Tragorgan (3) mit einer Stützfläche (4) versehen ist,
welche wenigstens ein mit Zähnen (5) ausgeführtes, plattenförmiges Messerorgan (6) unterstützt. Die Zähne (5) des
Messerorganes (6) können wenigstens angenähert horizontal oder vertikal bewegend auf das Gewächs einwirken.
Nach der Erfindung schliesst die vom Tragorgan (3) abgekehrte Seite des Messerorganes (6) einen spitzen Winkel
mit der Vertikalen ein, derart, dass bei der abwärtsen Bewegung des Tragorganes (3) das Messerorgan (6) durch das
Gewächs gegen das Tragorgan (3) gedrückt wird.
Die Erfindung betrifft weiterhin einen Silagegut-Schneider
(1), der mit einem Gestell (21) versehen ist, das an einem
Schlepper befestigbar ist und einen aufstehenden Gestellteil (23) umfasst, während an einem wenigstens angenähert
horizontalen Querbalken (24) eine Anzahl von parallelen
Tragezinken (25) befestigt ist. Dieser Silagegutschneider (1)
ist ausgeführt mit einer Schneidvorrichtung nach der Erfindung.
Schliesslich betrifft die Erfindung ein landwirtschaftliches
Gerät, das mit einer Schneidvorrichtung nach der Erfindung
ausgeführt ist.

Eur. 67/10-dV/kvn      _1_      0128246

Schneidvorrichtung zum Schneiden von Viehfutter oder dergleichem Gewächs,sowie Silagegutschneider, oder sonstiges landwirtschaftliches Gerät, ausgeführt mit einer dergleichen Schneidvorrichtung.

Die Erfindung bezieht sich auf eine Schneidvorrichtung zum Schneiden von Viehfutter oder dergleichem Gewächs, versehen mit einem aufwärts und abwärts beweglichen, plattenförmigen Tragorgan mit einer Stützfläche, die wenigstens ein mit Zähnen ausgeführtes, plattenförmiges Messerorgan unterstützt, welche Zähne des Messerorganes wenigstens angenähert horizontal oder vertikal bewegend auf das Gewächs einwirken können, sowie auf einen Silagegutschneider oder ein sonstiges landwirtschaftliches Gerät, ausgeführt mit einer dergleichen Schneidvorrichtung.

Bei Versuchen mit einem Silagegutschneider, versehen mit einer dergleichen Schneidvorrichtung, hat sich herausgestellt, dass die Schneidwirkung unter Umständen stark abnehmen kann und sogar ganz verlorengehen kann, indem sich zwischen dem Tragorgan und dem Messerorgan Gewächs anhäuft.

Die Erfindung bezweckt eine Schneidvorrichtung der im Anfang genannten Art zu schaffen, bei welcher dieser Nachteil in einfacher, jedoch nichtsdestoweniger zweckmässiger Weise beseitigt ist.

Zu diesem Zweck ist die Schneidvorrichtung nach der Erfindung dadurch gekennzeichnet, dass die vom Tragorgan abgekehrte Seite des Messerorganes einen spitzen Winkel mit der Vertikalen einschliesst, derart, dass bei der abwärtsen Bewegung des Tragorganes das Messerorgan durch das Gewächs gegen das Tragorgan gedrückt wird.

In dieser Weise wird erreicht, dass die bei der abwärtsen Bewegung des Tragorganes während des Schneidens durch das Gewächs auf das Messerorgan ausgeübten Kräfte eine Komponente aufweisen, die das Messerorgan gegen das Tragorgan klemmt, sodass kein Gewächs zwischen das Messerorgan und das Tragorgan gelangen kann und die Schneidwirkung unter allen Umständen optimal bleibt.

Nach einer einfachen Ausführungsform der Erfindung schliesst wenigstens der die Stützfläche umfassende Teil des Tragorganes einen spitzen Winkel mit der Vertikalen ein.

Nach der Erfindung kann die Stützfläche des Tragorganes in abwärtser Richtung abgeschrägt sein.

Bei der Schneidvorrichtung der im Anfang genannten Art kann das Tragorgan L- oder U-förmig mit zwei bzw. drei Stützflächen sein, die je ein Messerorgan unterstützen, welche Messerorgane zusammen einen L- bzw. U-förmigen Verlauf aufweisen, wobei die benachbarten Enden der aufeinanderfolgenden Messerorgane durch ein biegsames Küppelorgan miteinander gekuppelt sind.

Nach einer günstigen Ausführungsform der Erfindung wird die Schneidvorrichtung dadurch gekennzeichnet, dass die aufeinanderfolgenden geraden Teile des Tragorganes über einen Kurventeil in einander übergehen, wobei in jedem Kurventeil und den anschliessenden Enden der geraden Teile des Tragorganes in Höhe des betreffenden Kuppelorganes eine Führungsplatte für das betreffende Kuppelorgan angeordnet ist.

In der Ecke oder den Ecken des Tragorganes wird das Gewächs am leichtsten zwischen die Messerorgane und das Tragorgan gelangen, wodurch die oben bereits genannten Probleme auftreten können.

Nach einer günstigen Ausführungsform der Erfindung ist eine Abführungsöffnung im Tragorgan gebildet. Hierdurch wird erreicht, dass Gewächs, das in der Ecke oder den Ecken des Tragorganes zwischen die Messerorgane und das Tragorgan gelangt, sofort wieder über die im Tragorgan gebildeten Abführungsöffnungen abgeführt wird.

Die Erfindung betrifft weiterhin einen Silagegut-Schneider, versehen mit einem Gestell, das an einem Schlepper befestigbar ist und einen aufstehenden Gestellteil umfasst, während an einem wenigstens angenähert horizontalen Querbalken eine Anzahl von parallelen Tragezinken befestigt ist. Dieser Silagegutschneider ist dadurch gekennzeichnet, dass dieser mit einer Schneidvorrichtung nach der Erfindung ausgeführt ist.

Schliesslich betrifft die Erfindung ein landwirtschaftliches Gerät, das durch eine Schneidvorrichtung nach der Erfindung gekennzeichnet ist.

Die Erfindung wird hiernach weiter an Hand der Zeichnung erläutert.

Fig. 1 ist eine perspektivische Ansicht eines Silagegutschneiders, der mit einer Ausführungsform der
Schneidvorrichtung nach der Erfindung ausgeführt ist.

Fig. 2 is ein Schnitt der Schneidvorrichtung des
Silagegutschneiders aus Fig. 1 nach der Linie II-II.

Fig. 3 ist eine perspektivische Ansicht eines Eckteiles der Schneidvorrichtung aus Fig. 1 in grösserem Masstab.

Fig. 4 ist ein teilweise dargestellter Schnitt des
Silagegutschneiders aus Fig. 1 nach der Ebene IV-IV.

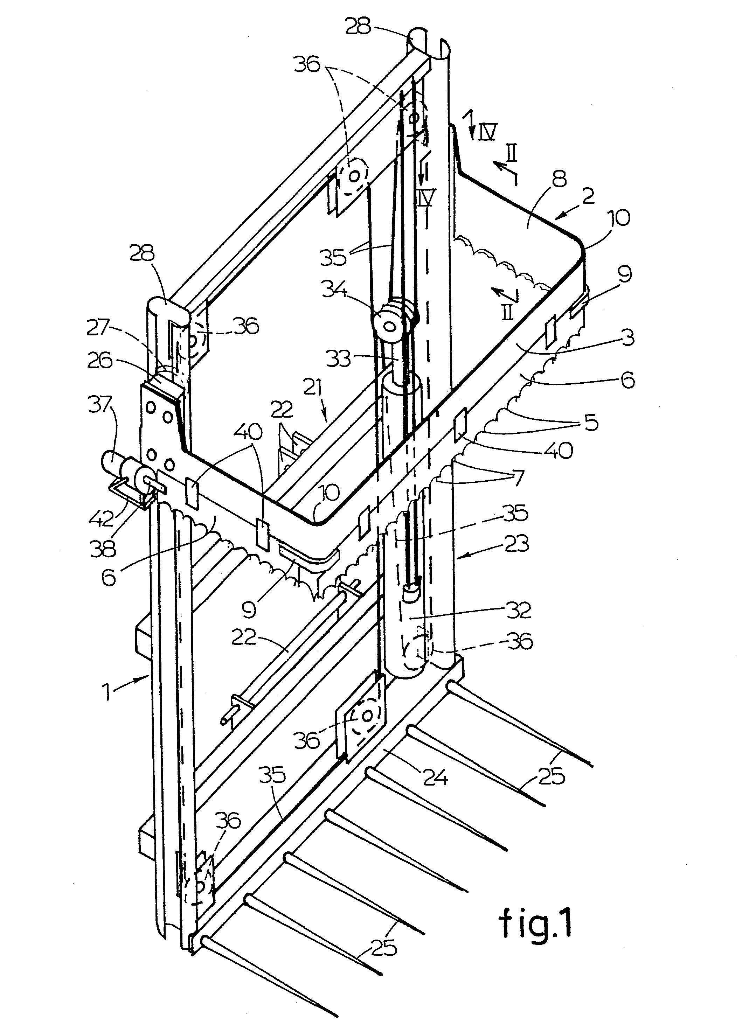

In Fig. 1 ist eine perspektivische Ansicht eines
Silagegutschneiders 1 dargestellt, der mit einer Schneidvorrichtung 2 zum Schneiden von Viehfutter oder dergleichem Gewächs versehen ist. Beim dargestellten Ausführungsbeispiel
ist die Schneidvorrichtung 2 mit einem U-förmigen Tragorgan
3 versehen, das aus einem zur gewünschten U-Form gebogenen
Blech gebildet ist. Die Schenkel des U-förmigen Tragorganes
3 schliessen dabei einen stumpfen Winkel mit dem Steg des
Tragorganes 3 ein. Das Tragorgan 3 ist zum Ausschneiden eines
Silagegutblockes aus einem Silagegutvorrat aufwärts und abwärts beweglich, wie weiterhin noch näher beschrieben werden
wird.

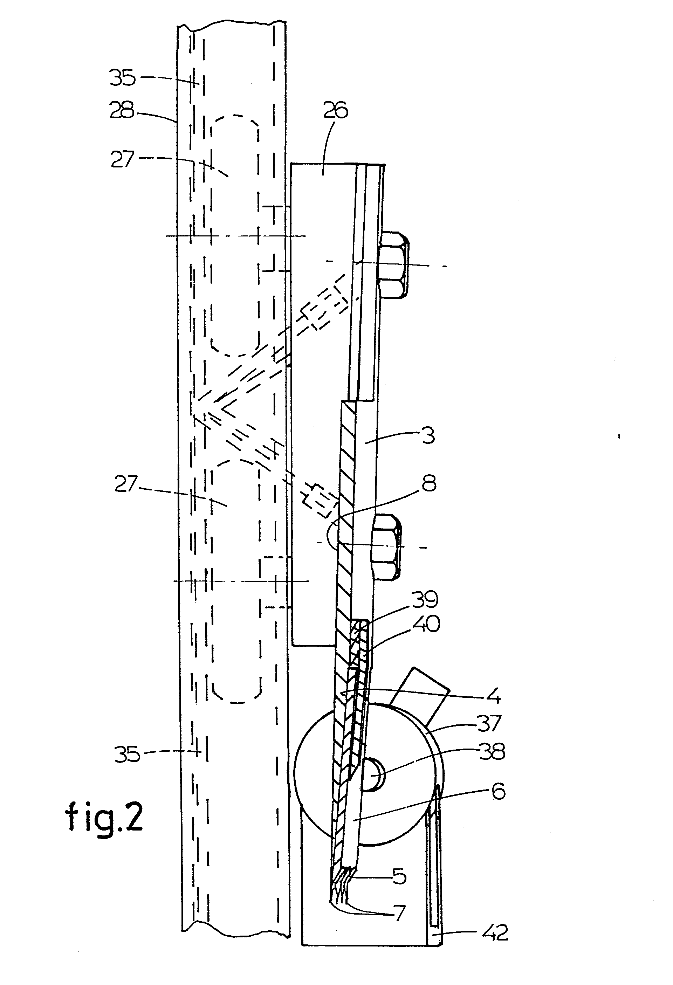

Die Schenkel und der Steg des Tragorganes 3 sind je
mit einer Stützfläche 4 versehen, die, wie in Fig. 2 dargestellt ist, ein mit Zähnen 5 ausgeführtes, plattenförmiges
Messerorgan 6 unterstützt. Die drei Messerorgane 6 sind relativ
zum Tragorgan 3 hin und her verstellbar. Das Tragorgan 3 besitzt Festhaltezähne 7, die relativ zu den Zähnen 5 der Messerorgane 6 abwärts ausragen und gleichzeitig mit den Zähnen
5 der Messerorgane 6 auf das zuschneidende Gewächs einwirken
können. Dadurch wird eine besonders zweckmässige Schneidwirkung
der Schneidvorrichtung 2 erzielt.

Die Schenkel und der Steg des U-förmigen Tragorganes
3 schliessen einen spitzen Winkel mit der Vertikalen ein,
wie in Fig. 2 für den einen Schenkel dargestellt ist. Dieser
Winkel beträgt vorzugsweise wenigstens 1°.Weiterhin ist jede
Stützfläche 4 des Tragorganes 3 in Richtung der Festhaltezähne
7 abgeschrägt, wobei der Winkel, den die Ebene der Stützfläche
4 mit der Ebene des übrigen Teiles des Tragorganes 3 einschliesst,
vorzugsweise wenigstens 2° beträgt, so dass die vom Tragorgan
3 abgekehrte Seite der Messerorgane einen Winkel von wenigstens
3° mit der Vertikalen einschliesst. In dieser Weise wird erzielt, dass die Kräfte,die bei der abwärtsen Bewegung des Tragorganes 3 durch das Gewächs auf die Messerorgane 6 ausgeübt werden, eine Komponente aufweisen, welche die Messerorgane 6 auf die Stützflächen 4 des Tragorganes 3 drücken. Dadurch wird verhindert, das Gewächs zwischen die Messerorgane 6 und das Tragorgan 3 gelangen kann. Gleichfalls wird durch die schräg nach aussen verlaufende Innenseite 8 der Schenkel und des Steges des Tragorganes 3 erzielt, dass beim Aufwärtsbewegen des Tragorganes 3 die Wände des ausgeschnittenen Silagegut-Blockes kaum abbröckeln, so dass kein Silagegut verloren geht.

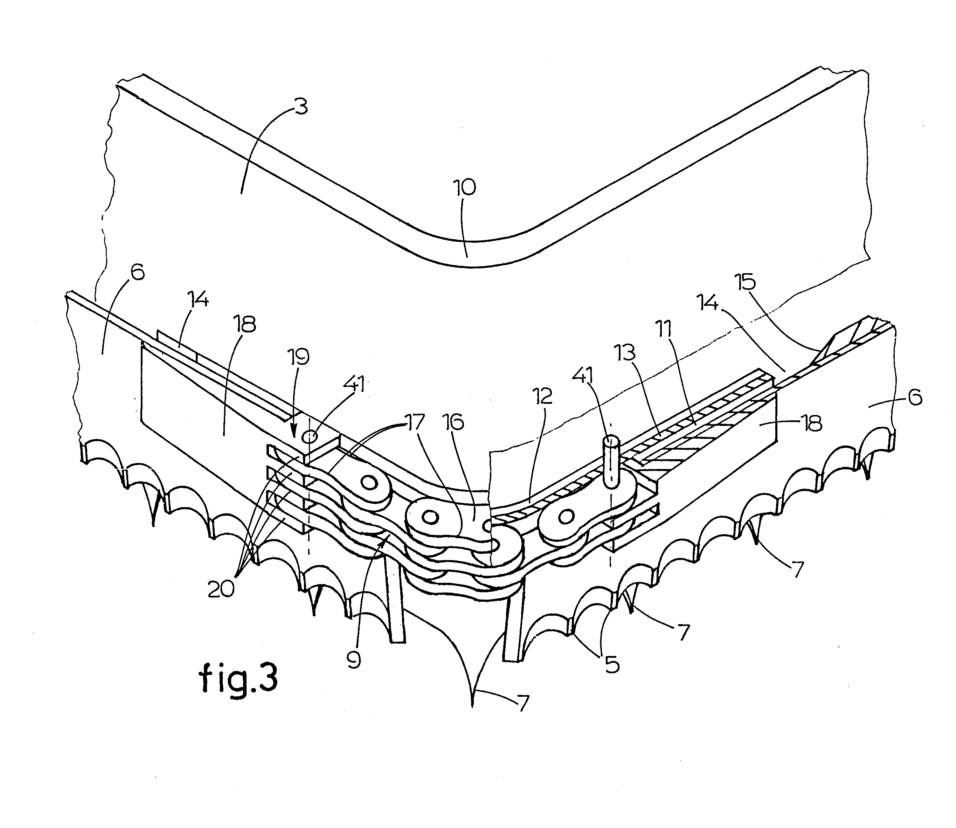

Wie aus den Fig. 1 und 3 hervorgeht, sind die benachbarten Enden der aufeinanderfolgenden Messerorgane 6 durch eine Kette 9 miteinander gekuppelt. Erwünschtenfalls kann ein anderes biegsames Kuppelorgan angewandt werden, wie ein Band oder dergleiche. In den Kurventeile 10 und den anschliessenden Enden der Schenkel und des Steges des Tragorganes 3 ist in Höhe der Kette 9 ein Schlitz 11 angeordnet. Auf der Innenseite 8 des Tragorganes 3 ist an der Stelle jedes Schlitzes 11 eine gekrümmte Führungsplatte 12 befestigt, die den Schlitz 11 zum grössten Teil abschliesst. Die Führungsplatte 12 trägt eine bronzene Leitplatte 13, die in den betreffenden Schlitz 11 hineinragt und die zugehörige Kette 9 führt. Die Ketten 9 liegen dadurch einigermassen versenkt im Schlitz 11, wodurch das Mitreissen des Gewächses bei der hin und her gehenden Bewegung der Messerorgane 6 auf ein Minimum beschränkt ist. Weiterhin trägt die bronzene Leitplatte 13 Sorge für eine schnelle Abfuhr der während der Bewegung erzeugten Wärme.

Zwischen den Enden der Führungsplatte 12 und den Enden des Schlitzes 11 liegen Abführungsöffnungen 14, wobei die an den Schlitz 11 anschliessenden Teile des Tragorganes 3 abgeschrägt sind, wie bei 15 dargestellt ist.Dadurch kann Gewächs, das in den Ecken des Tragorganes möglicherweise noch zwischen die Messerorgane 6 und das Tragorgan 3 gelangt, schnell abgeführt werden, so dass dieses keinen nachteiligen Einfluss auf die Schneidwirkung der Schneidvorrichtung 2 ausüben kann.

Jede Kette besteht aus einer Anzahl von Gliedern 16, welche Glieder 16 je mit abgerundeten Ausnehmungen 17 versehen sind. Der Krümmungsradius dieser Ausnehmungen 17 ist wenigstens angenähert gleich demjenigen des zugehörigen Kurventeil 10 des Tragorganes 3, so dass die Glieder 16 eng an die bronzene Leitplatte 13 anschliessen. Jede Kette 9 ist weiterhin mittels zwei Kuppelstücke 18 mit den benachbarten Enden der zugehörigen Messerorgane 6 gekuppelt. Die Kuppel-Stücke 18 sind auf den betreffenden Enden der Messerorgane 6 befestigt. Jedes Kuppelstück 18 weist ein gabelförmiges Ende 19 auf, dessen Zähne 20 wenigstens angenähert horizontal verlaufen und mit dem zugehörigen Endglied 16 der Kette 9 verbunden sind. Weiterhin ragt das Ende 19 in den zugehörigen Schlitz 11 ein.

Der in Fig. 1 abgebildete, mit der Schneidvorrichtung 2 ausgeführte Silagegutschneider 1 ist mit einem Gestell 21 versehen, das mit Anhängepunkten 22 zum Ankuppeln des Silagegutschneiders 1 an die Hebevorrichtung eines Schleppers ausgeführt ist. Das Gestell 21 umfasst einen aufstehenden Gestellteil 23 mit am Unterende einem horizontalen Querbalken 24, an welchem eine Anzahl von parallelen Tragezinken 25 befestigt ist.

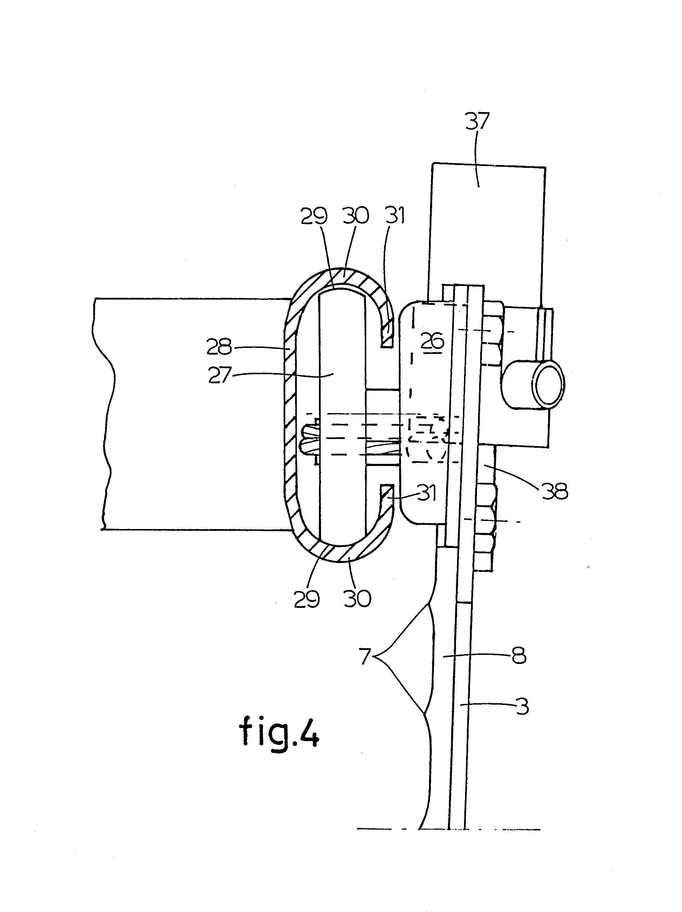

Das U-förmige Tragorgan 3 der Schneidvorrichtung 2 ist an beiden Enden mit Trägern 26 (siehe Fig. 2 und 4) versehen, in welchen jeweils zwei Räder 27 drehbar gelagert sind. Das Tragorgan 3 ist mit den Rädern 27 wenigstens angenähert in vertikaler Richtung in zwei C-Profilen 28 des aufstehenden Gestellteiles 23 geführt. Die offenen Seiten der C-Profile 28 sind dabei voneinander abgekehrt. Beim Schneiden eines Silagegutblockes aus dem Silagegutvorrat werden durch die Räder 27 grosse Kräfte auf den C-Profilen 28 des aufstehenden Gestellteiles 23 ausgeübt. Um diese Kräfte möglichst gut aufnehmen zu können weisen die Räder 27 eine abgerundete Lauffläche 29 auf, wobei der Krümmungsradius der Lauffläche 29 grösser als der Krümmungsradius der gebogenen Teile 30 der C-Profile 28 ist. In dieser Weise wird erzielt, dass im Betrieb, wobei die C-Profile 28 durch die auftretenden Kräften einigermassen offen gebogen werden, die Laufflächen 29 der Räder 27 über nahezu die ganze Fläche mit der Innenseite der gekrümmten Teile 30 der C-Profile 28 in Berührung sind, so dass die durch die Räder 27 ausgeübten Kräfte möglichst gut verteilt werden. Weiterhin ist jedes C-Profil 28 an den freien Enden der Teile 30 mit einer geraden Verlängerung 31 ausgeführt, welche die Festigkeit des C-Profiles 28 verbessert.

Die aufwärtse und abwärtse Bewegung des U-förmigen Tragorganes 3 wird bewirkt mittels durch das Gestell 21 getragener Verstellorgane. Beim in Fig. 1 dargestellten Silagegut-Schneider bestehen diese Verstellorgane aus einer durch das Gestell 21 unterstützten aufstehenden Zylinder-Kolbeneinheit 32, deren Kolbenstange 33 einen Scheibenblock 34 trägt. Mittels vier Seile 35, die über den Scheibenblock 34 und über weitere, durch das Gestell 21 unterstützte Scheibenblöcke 36 geführt sind und je mit einem Ende an das Gestell 21 und mit dem anderen Ende an einen Träger 26 des Tragorganes 3 angreifen, ist das Tragorgan aufwärts und abwärts verstellbar. Wenn die Kolbenstange 33 der Zylinder-Kolbeneinheit 32 mit dem Scheibenblock 34 abwärts verstellt wird, wird das Tragorgan 3 aufwärts bewegt, während, wenn die Kolbenstange 33 der Zylinder-Kolbeneinheit 32 aufwärts verstellt wird, das Tragorgan 3 abwärts gezogen wird. Wie aus den Fig. 1, 2 und 4 hervorgeht, verlaufen die Seile 35 teilweise in den C-Profilen 28, so dass die Seile 35 möglichst gut geschützt sind.

Die drei Messerorgane 6, die durch die Ketten 9 mit einander gekuppelt sind, sind bei der Schneidvorrichtung 2 relativ zum Tragorgan 3 hin und her verstellbar mittels zwei Zylinder-Kolbeneinheiten 37, deren Kolbenstangen 38 an den betreffenden freien Enden der auf den Schenkeln des Tragorganes 3 befindlichen Messerorgane 6 befestigt sind. Die Zylinder-Kolbeneinheiten 37 werden durch das Tragorgan 3 unterstützt. Diese Zylinder-Kolbeneinheiten 37 sind beim in Fig. 1 dargestellten Ausführungsbeispiel doppelwirkend ausgeführt und werden über ein hydraulisches Umschaltventil und Rückschlagventile derart betätigt, dass die Kolbenstangen 38 immer in entgegengesetzter Richtung verstellt werden, wodurch die Messerorgane 6 die gewünschte hin und her gehenden Bewegung erhalten.

Die beiden doppelwirkenden Zylinder-Kolbeneinheiten 37 sind weiterhin hydraulisch gekuppelt mit der aufstehenden Zylinder-Kolbeneinheit 32, wobei das Tragorgan 3 schrittweise verstellt wird, wobei jeder Schritt zum Beispiel mit einer hin und her gehenden Bewegung der Messerorgane 6 zusammenfällt.

Auf den Schenkeln und dem Steg des U-förmigen Tragorganes 3 sind Stützen 39 für die Messerorgane 6 angeordnet, wobei der obere Rand der Messerorgane 6 entlang den Stützen hin und her verstellbar ist. Die Stützen 39 tragen abwärts ausragende Einschliesslippen 40, wodurch die Messerorgane 6 in Zusammenwirkung mit der Verbindung der Enden
der Messerorganen mit den Kolbenstangen 38 der Zylinder-
Kolbeneinheiten 37 und den mit ihren Enden 19 in den Schlitzen
11 geführten Kuppelstücken 18 in ihrer Stellung gehalten werden. Die Messerorgane 6 sind dabei jeweils nur an den Enden an
das Tragorgan 3 angehängt, so dass das Lösen der Messerorgane
6 einfach dadurch stattfinden kann, dass die Verbindungsstifte
41, die die Verbindung mit den Ketten 9 bewirken, entfernt
werden und die durch einen Kuppelstift (in der Zeichnung nicht
ersichtlich) bewirkte Verbindung mit den Kolbenstangen 38 unterbrochen wird.

Es wird bemerkt, dass jeder Verbindungsstift 41 in
einer wenigstens ungefähr vertikalen Ebene liegt, in welcher
wenigstens angenähert gleichfalls die Verlängerung der Oberseite des betreffenden Messerorganes 6 liegt.

Das Tragorgan 3 ist an den freien Enden mit Stützen
42 versehen, die relativ zu den Messerorganen 6 und den Festhaltezähnen 7 des Tragorganes 3 abwärts ausragen (siehe Fig. 2).
Das Tragorgan 3 ist dabei mit den Zähnen der Messerorganen 6
bis über die Tragezinken 25 des Gestelles 21 hinaus verstellbar. Die Stützen 42 legen sich am Ende des Schneidzyklus auf
den Boden, so dass die Tragezinken 25 einigermassen aufwärts
angehoben werden und der ausgeschnittene Silagegutblock ganz
aus dem Silagegutvorrat gelöst wird.

Beim in Fig. 1 dargestellten Silagegutschneider 1
verläuft das U-förmige Tragorgan 3 in der Ruhestellung vom
aufstehenden Gestellteil 23 schräg abwärts, wobei ein Winkel
von ungefähr 1° mit der horizontalen Ebene eingeschlossen
wird. Dadurch wird im Betrieb das Tragorgan 3 ungefähr horizontal sein.

Die Erfindung beschränkt sich nicht auf das im
vorstehenden beschriebene Ausführungsbeispiel, das im Ramen
der Erfindung in verschiedenen Weisen abgeändert werden kann.
Es ist beispielsweise möglich auch sonstige landwirtschaftliche
Geräte für Viehfuttergewächs mit einer Schneidvorrichtung
nach der Erfindung auszurüsten.

Weiterhin kann die Schneidvorrichtung auch mit einem
L-förmigen Tragorgan ausgeführt werden, das mit zwei Messerorganen zusammenwirkt. Für bestimmte Anwendungen kann auch ein gerade ausgeführtes Tragorgan genügen,das  mit einem Messerorgan zusammenwirkt.

Es wird bemerkt, dass jede Stützfläche des Tragorganes auch mit zwei Messerorganen zusammenwirken kann, in welchem Fall die Festhaltezähne gegebenenfalls fortgelassen werden können. Die Messerorgane können statt in horizontaler auch in vertikaler Richtung beweglich ausgeführt sein. Statt der bronzenen Leitplatte 13 kann auch ein anderes Gleitelement angewandt werden, das beispielsweise aus Kunststoff besteht.

Patentansprüche

1. Schneidvorrichtung zum Schneiden von Viehfutter oder dergleichen Gewächs, versehen mit einem aufwärts und abwärts beweglichen, plattenförmigen Tragorgan mit einer Stützfläche, die wenigstens ein mit Zähnen ausgeführtes, plattenförmiges Messerorgan unterstützt, welche Zähne des Messerorganes wenigstens angenähert horizontal oder vertikal bewegend auf das Gewächs einwirken können, dadurch gekennzeichnet, dass die vom Tragorgan abgekehrte Seite des Messerorganes einen spitzen Winkel mit der Vertikalen einschliesst, derart, dass bei der abwärtsen Bewegung des Tragorganes das Messerorgan durch das Gewächs gegen das Tragorgan gedrückt wird.

2. Schneidvorrichtung nach Anspruch 1, dadurch gekennzeichnet, dass wenigstens der die Stützfläche umfassende Teil des Tragorganes einen spitzen Winkel mit der Vertikalen einschliesst.

3. Schneidorgan nach Anspruch 2, dadurch gekennzeichnet, dass das ganze Tragorgan einen spitzen Winkel mit der Vertikalen einschliesst.

4. Schneidvorrichtung nach Anspruch 1, 2 oder 3, dadurch gekennzeichnet, dass die Stützfläche des Tragorganes in abwärtser Richtung abgeschrägt ist.

5. Schneidvorrichtung nach Anspruch 1, 2, 3 oder 4, dadurch gekennzeichnet, dass der spitze Winkel, welchen die vom Tragorgan abgekehrte Seite des Messerorganes mit der Vertikalen einschliesst, wenigstens 3° beträgt.

6. Schneidvorrichtung nach einem der vorstehenden Ansprüche, bei welcher das Tragorgan L- oder U-förmig mit zwei bzw. drei Stützflächen ist, die je ein Messerorgan unterstützen, welche Messerorgane zusammen einen L- bzw. U-förmigen Verlauf aufweisen, wobei die benachbarten Enden der aufeinanderfolgenden Messerorgane durch ein biegsames Kuppelorgan miteinander gekuppelt sind, dadurch gekennzeichnet, dass die aufeinanderfolgenden geraden Teile des Tragorganes über einen Kurventeil in einander übergehen, wobei in jedem Kurventeil und den anschliessenden Enden der geraden Teile des Tragorganes in Höhe des betreffenden Kuppelorganes eine Führungsplatte für das betreffende Kuppelorgan angeordnet ist.

7. Schneidvorrichtung nach Anspruch 6, dadurch gekennzeichnet, dass auf beiden Seiten der Führungsplatte eine Abführungsöffnung im Tragorgan gebildet ist.

8. Schneidvorrichtung nach Anspruch 7, dadurch gekennzeichnet, dass in jedem Kurventeil des Tragorganes in Höhe des betreffenden Kuppelorganes ein Schlitz angeordnet ist, während auf der Innenseite des Tragorganes die Führungsplatte befestigt ist, die den Schlitz zum grössten Teil abschliesst und ein Gleitelement trägt, das in den Schlitz hineinragt.

9. Schneidvorrichtung nach Anspruch 6,7 und 8, dadurch gekennzeichnet, dass die durch das Tragorgan bestimmten vertikalen Endwände der Abführungsöffnung abgeschrägt sind.

10. Schneidvorrichtung nach Anspruch 6, 7, 8 oder 9, dadurch gekennzeichnet, dass jedes Kuppelorgan aus einer Kette besteht, deren Glieder mit abgerundeten Ausnehmungen versehen sind, wobei der Krümmungsradius der Ausnehmungen wenigstens angenähert gleich demjenigen des zugehörigen Kurventeiles ist.

11. Schneidvorrichtung nach Anspruch 10, dadurch gekennzeichnet, dass jede Kette mittels Kuppelstücke mit den benachbarten Enden der zugehörigen Messerorgane gekuppelt ist, welche Kuppelstücke auf den betreffenden Enden der Messerorgane befestigt sind und je ein gabelförmiges Ende mit Zähnen aufweisen, die wenigstens angenähert horizontal verlaufen und mit dem zugehörigen Endglied der Kette verbunden sind.

12. Schneidvorrichtung nach Anspruch 11, dadurch gekennzeichnet, dass in den Zähnen eine wenigstens angenähert vertikale Bohrung gebildet ist, wobei ein Verbindungsstift die Zähne mit dem zugehörigen Endglied der Kette verbindet, welcher Verbindungsstift in einer Ebene liegt, in welcher wenigstens angenähert auch die Verlängerung der Oberseite des betreffenden Messerorganes liegt.

13. Schneidvorrichtung nach einem der Ansprüche 6-12,dadurch gekennzeichnet, dass jedes Messerorgan an seinen Enden lösbar am Tragorgan angehängt ist.

14. Silagegutschneider versehen mit einem Gestell, dass an einem Schlepper befestigbar ist und einen aufstehenden Gestellteil umfasst, während an einem wenigstens angenähert horizontalen Querbalken eine Anzahl von parallelen Tragezinken befestigt ist, dadurch gekennzeichnet, dass dieser Silagegut-Schneider mit einer Schneidvorrichtung nach einem der vorstehenden Ansprüche ausgeführt ist.

15. Silagegutschneider nach Anspruch 14, dessen Schneidvorrichtung mit einem U-förmigen Tragorgan mit drei damit zusammenwirkenden, gekuppelten Messerorganen ausgeführt ist, welches Tragorgan durch den aufstehenden Gestellteil in wenigstens angenähert vertikaler Richtung gefühlt ist, dadurch gekennzeichnet, dass der aufstehende Gestellteil zwei C-Profile umfasst, wobei die Enden des Tragorganes je mit wenigstens einem Rad im zugehörigen C-Profil geführt sind.

16. Silagegutschneider nach Anspruch 15, dadurch gekennzeichnet, dass die Räder eine abgerundete Lauffläche aufweisen, wobei der Krümmungsradius der Lauffläche grösser als der Krümmungsradius der gekrümmten Teile der C-Profile ist.

17. Silagegutschneider nach Anspruch 15 oder 16, dadurch gekennzeichnet, dass jedes C-Profil an den freien Enden der gekrümmten Teile eine gerade Verlängerung aufweist.

18. Silagegutschneider nach einem der Ansprüche 14-17, bei welchem das Gestell eine aufstehende Zylinder-Kolbeneinheit für die aufwärtse und abwärtse Bewegung des Tragorganes trägt, welche Zylinder-Kolbeneinheit einen Scheibenblock trägt, über welchen Seile geführt sind, die an das Tragorgan angreifen, dadurch gekennzeichnet, dass die Seile wenigstens angenähert im aufstehenden Gestellteil verlaufen.

19. Silagegutschneider nach einem der Ansprüche 14-18, dadurch gekennzeichnet, dass das Tragorgan an den Enden Stützen aufweist, die relativ zu den Messerorganen abwärts ausragen.

20. Silagegutschneider nach Anspruch 19, dadurch gekennzeichnet, dass das Tragorgan mit den Zähnen der Messerorgane bis über die Tragezinken des Gestelles hinaus verstellbar ist.

21. Silagegutschneider nach einem der Ansprüche 15-20, dadurch gekennzeichnet, dass das U-förmige Tragorgan vom aufstehenden Gestellteil schräg abwärts verläuft.

22. Landwirtschaftliches Gerät, gekennzeichnet durch eine Schneidvorrichtung nach einem der Ansprüche 1-9.

fig.1

35

28

27

26

27

3

8

39

40

4

37

38

6

35

5

7

42

fig.2

fig.3

fig.4

Europäisches
Patentamt

EUROPÄISCHER RECHERCHENBERICHT

0128246

Nummer der Anmeldung

EP 83 20 0867

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | BE-A- 872 377 (VAN LENGERICH) <br><br> * Seite 4, Absatz 3; Seite 6, Absatz 2; Seite 7, Absatz 2; Abbildungen 1-8 * <br> --- | 1,2,5, 14,15, 18 | A 01 F 25/20 <br> B 26 D 7/01 |
| A | LANDBOUWMECHANISATIE, Band 34, Nr. 1, Januar 1983, Seiten 51-52, Deventer, NL. <br> L. VAN LOO: "Werktuigen voor het uithalen en voeren van kuilvoer" <br> --- | 1,6,8, 10,14 | |
| A | DE-A-2 918 650 (STRAUMANN) <br><br> ----- | | |

RECHERCHIERTE SACHGEBIETE (Int. Cl. ³)

A 01 F
B 26 D

Der vorliegende Recherchenbericht wurde für alle Patentansprüche erstellt.

| Recherchenort <br> DEN HAAG | Abschlußdatum der Recherche <br> 30-09-1983 | Prüfer <br> VERMANDER R.H. |
|---|---|---|

EPA Form 1503. 03.82

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, überein- stimmendes Dokument